# EUROPEAN PATENT APPLICATION

(11) **EP 4 763 809 A1**
(43) Date of publication of application: **24.06.2026**
(21) Application number: 24221626.5
(22) Date of filing: 19.12.2024
(51) Int. Cl.: C02F 1/42, C02F 1/28

(54) **LIQUID TREATMENT CARTRIDGE AND SYSTEM**

(71) Applicant: BRITA SE, 65232 Taunusstein (DE)
(72) Inventor: Hagen, Thomas, 65232 Taunusstein (DE)

(57) **Abstract**

A liquid treatment cartridge comprises a housing. The housing comprises an axial end wall (17) at one axial end, with respect to a cartridge axis (13). The housing comprises at least one liquid inlet (22) in an exterior surface (20) of the housing at the one axial end. The housing encloses a chamber (16). The housing comprises at least one axial section pervious to liquid flowing out of the chamber (16) at a position axially removed from the one axial end of the housing. The housing comprises at least one hollow structure (18) of which at least a part protrudes into the chamber (16) with respect to the axial end wall (17). The protruding part of the hollow structure (18) provides at least one liquid outlet allowing liquid to pass from an interior (24) of the hollow structure (18) into the chamber (16). The interior (24) of the hollow structure (18) is continued by a passage (23) through the axial end wall (17), which passage (23) terminates at at least one of the at least one liquid inlets (22). The housing comprises at least one venting passage (25a-d) extending from a gas inlet (26a-d) to a gas outlet (27a-d) and through the axial end wall (17) for venting gas from the chamber (16). The gas outlet (27a-d) is a gas outlet (27a-d) formed in the exterior surface (20). The gas inlet (26a-d) is a gas inlet (26a-d) separate from the protruding part of the hollow structure (18).

## Description

The invention relates to a liquid treatment cartridge, comprising a housing,
wherein the housing comprises an axial end wall at one axial end, with respect to a cartridge axis,
wherein the housing comprises at least one liquid inlet in an exterior surface of the housing at the one axial end,
wherein the housing encloses a chamber,
wherein the housing comprises at least one axial section pervious to liquid flowing out of the chamber at a position axially removed from the one axial end of the housing,
wherein the housing comprises at least one hollow structure of which at least a part protrudes into the chamber with respect to the axial end wall,
wherein the protruding part of the hollow structure provides at least one liquid outlet allowing liquid to pass from an interior of the hollow structure into the chamber,
wherein the interior of the hollow structure is continued by a passage through the axial end wall, which passage terminates at at least one of the at least one liquid inlets, and
wherein the housing comprises at least one venting passage extending from a gas inlet to a gas outlet and through the axial end wall for venting gas from the chamber.

The invention also relates to a liquid treatment system.

WO 2021/014261 A1 discloses a gravity filter filtering device for softening and purifying drinking water, which comprises a system for fixing the filtering device to a filter funnel, which has openings for inlet of water to be treated and for outlet of air; a filter element made of porous block material in the form of a hollow vertical vessel having a porous or hermetically sealed bottom, and, arranged therein, a layer of ion exchange material and a treatment water flow distributor comprising a fixing element, wherein the layer of ion exchange material is disposed between an inner surface of the filter element and the treatment water flow distributor. The treatment water flow distributor is in the form of a vertical or horizontal body having openings of a size smaller than the particle size of the ion exchange material. The system for fixing the filtering device is made in a form that allows the filtering device to be hermetically sealed to the body of the filter funnel. The system for fixing the filtering device is either in the form of a threaded unit that is connected to a threaded portion of the funnel or in the form of a rim. The rim comprises elements for tightly fitting to the funnel opening and is connected to the filter element body by an adhesive joint using either melted polymer or any other adhesive material or by a mechanical connection engaging on the inner or outer or both inner and outer vertical wall surface(s) of the filter element. In all embodiments, the treatment water flow distributors are connected to the filter element by a sleeve made of elastic material. It is disclosed that openings in vertical walls of the treatment water flow distributors are provided at a height of not more than 60 % from a bottom level of the treatment water flow distributor.

A problem then is that gas above the layer of ion exchange material must exit via either the porous filter element body or the same route as the liquid entering the layer via the water flow distributor, which is down through the layer of ion exchange material and up through the water flow distributor. Venting is thus impeded.

It is an object of the invention to provide a liquid treatment cartridge and liquid treatment system of the types mentioned above in the opening paragraphs that allow for relatively effective venting of the chamber.

This problem is solved according to a first aspect by the liquid treatment cartridge according to the invention, which is characterised in that the gas outlet is a gas outlet formed in the exterior surface, and in that the gas inlet is a gas inlet separate from the protruding part of the hollow structure.

The liquid treatment cartridge comprises a housing comprising an axial end wall at one axial end, with respect to a cartridge axis. The axial end wall will generally be self-supporting. In that case, the axial end wall retains its shape, being elastically deformable to a limited extent such as to return to an initial shape when elastically deformed. Such a wall can generally withstand the pressure of a column of liquid to be treated when the liquid treatment cartridge is deployed in a gravity-driven system. The axial end wall may be impervious to liquid, e.g. impervious to fluid, given that the axial end wall comprises at least one passage for liquid and at least one venting passage.

The cartridge axis will generally be a body axis of the housing. In a gravity-driven liquid treatment system, the cartridge axis will generally be an upright axis, in use. The housing comprises at least one liquid inlet in an exterior surface of the housing, e.g. an exterior surface of the axial end wall, at the one axial end. The at least one liquid inlet may comprise a lattice or mesh or simply be an aperture. The housing encloses a chamber, i.e. a space, which may be at least partially occupied by a liquid treatment medium. It follows from the fact that at least part of the hollow structure protrudes into the chamber from the axial end wall that there is no further wall between the axial end wall and the interior of the chamber. Thus, the housing has no separate dome and there is therefore no further cavity between the axial end wall and such a dome. Only the axial end wall separates the chamber from an environment of the housing, although there may be a part like a mesh separating any liquid treatment medium in the chamber from the axial end wall. The housing comprises at least one axial section pervious to liquid flowing out of the chamber at a position axially removed from the one axial end of the housing. This section may comprise an outlet in the form of an aperture in an otherwise liquid-impervious wall. Alternatively, the section may comprise a porous wall section.

The housing comprises at least one hollow structure protruding into the chamber from the axial end wall. The structure is hollow in the sense that liquid can flow through an interior of the hollow structure. The interior need not, however, be completely empty. The protruding part of the hollow structure provides at least one liquid outlet allowing liquid to pass from an interior of the hollow structure into the chamber. Such a liquid outlet may comprise an aperture in an otherwise liquid-impervious section of the hollow structure or the liquid outlet may comprise a porous wall section of the hollow structure.

At least one of the at least one liquid outlets may be located in an axial section of the protruding part of the hollow structure separated in axial direction from the axial end wall by more than half an axial extent of the protruding part of the hollow structure. In practice, this means that these at least one liquid outlets would be located in a lower half of the protruding part of the hollow structure.

The interior of the hollow structure is continued (in upstream direction) by a passage through the axial end wall, which passage terminates at at least one of the at least one liquid inlets. The housing comprises at least one venting passage extending from a gas inlet to a gas outlet and through the axial end wall. Thus, gas arising or trapped in the chamber can escape from the chamber. The gas inlet may be formed in an interior housing surface bounding the chamber proximal to the one axial end, e.g. an interior surface of the axial end wall. Such a gas inlet would be at or close to the highest point of the chamber, in use. Because the gas outlet is a gas outlet formed in the exterior surface, and the gas inlet is a gas inlet separate from the hollow structure, the oppositely directed liquid and gas flows do not obstruct each other inside the liquid treatment cartridge, in principle. Because the hollow structure protrudes into the chamber from the axial end wall, the liquid to be treated enters the chamber centrally and can flow in multiple directions. Zones of stagnating liquid are generally avoided. Gas, by contrast, will gather at the top of the chamber, away from the point of entry of the liquid. The liquid will tend to drive the gas out of the chamber. These measures ensure that there is an adequate rate of flow through the liquid treatment cartridge, in use, and that adequate venting of the chamber is achieved.

At least one of the gas inlet and the gas outlet may be covered by a mesh.

In an embodiment, the gas outlet is a gas outlet formed separately from the liquid inlets.

This further prevents gas and liquid flows from obstructing each other.

In an embodiment of the liquid treatment cartridge, the housing has an outer perimeter, e.g. corresponding to an outer perimeter of the axial end wall, seen looking onto the axial end wall in axial direction, wherein the housing comprises a part for sealingly engaging a co-operating part of a liquid treatment system to form at least one seal extending in a closed loop around at least one of the at least one liquid inlets, and wherein the closed loop is located radially inwards of the outer perimeter.

Thus, the liquid treatment cartridge can have relatively large lateral dimensions relative to the diameter of an outlet opening of a liquid treatment system part from which the liquid treatment cartridge is configured to receive the liquid to be treated. The liquid inlet will be located within the closed loop. In a particular example, the gas outlets are also located within the closed loop. The part for sealingly engaging a co-operating part of a liquid treatment system to form at least one seal extending in a closed loop around at least one of the at least one liquid inlets may be a section of the exterior surface. Alternatively, this part may comprise a resilient sealing element for engaging a sealing surface of the co-operating part of the liquid treatment system. In the present context, a resilient sealing element is to be understood as a sealing element supported by a part that is less elastic than the resilient sealing element, for engaging a co-operating part that is also less elastic. Such a resilient sealing element may be a separate component held in a seat or a structure moulded into or over the supporting part. It is observed that the closed loop may be, but need not be, circular. The closed loop need not be centred on a central body axis of the housing of the liquid treatment cartridge either.

In a particular example of this embodiment, the seal is an axial seal.

This simplifies the mounting of the liquid treatment cartridge in the liquid treatment system. The co-operating parts forming the seal are compressed in axial direction to form the seal. The liquid treatment cartridge need only be pressed against the co-operating part of the liquid treatment system in axial direction. A radial seal would also be possible, e.g. between a part protruding outwards from the axial end wall and a co-operating part of the liquid treatment system shaped to receive at least a section of the protruding part, or between a protruding section of the co-operating part of the liquid treatment system and a lateral wall of a recess in the axial end wall. This would require more complicated alignment, however.

In an example of any embodiment in which the housing has an outer perimeter, e.g. corresponding to an outer perimeter of the axial end wall, seen looking onto the axial end wall in axial direction, the housing comprises a part for sealingly engaging a co-operating part of a liquid treatment system to form at least one seal extending in a closed loop around at least one of the at least one liquid inlets, and the closed loop is located radially inwards of the outer perimeter, the part for sealingly engaging a co-operating part of a liquid treatment system comprises at least one of
(i) a section of the axial end wall comprising a section of the exterior surface in which at least one of the at least one liquid inlets is formed and
(ii) a sealing element seated on the axial end wall and extending in a closed loop around at least one of the at least one liquid inlets.

Both alternatives are relatively easy to implement without having to provide the housing component comprising the axial end wall with a complex shape.

In the alternative in which the part for sealingly engaging a co-operating part of a liquid treatment system comprises a section of the axial end wall comprising a section of the exterior surface in which at least one of the at least one liquid inlets is formed, the number of components and materials of the liquid treatment cartridge is relatively low. This makes it easier to recycle the liquid treatment cartridge and makes the liquid treatment cartridge, which is the part with the shortest lifetime in the overall liquid treatment system, cheaper to manufacture.

In an example of any embodiment of the liquid treatment cartridge in which the housing has an outer perimeter, e.g. corresponding to an outer perimeter of the axial end wall, seen looking onto the axial end wall in axial direction, the housing comprises a part for sealingly engaging a co-operating part of a liquid treatment system to form at least one seal extending in a closed loop around at least one of the at least one liquid inlets, and the closed loop is located radially inwards of the outer perimeter, the closed loop further extends around the gas outlet of at least one of the at least one venting passages, e.g. around the respective gas outlet of all of the venting passages.

The venting passage(s) need not be provided with means to separate gas from liquid, as would be the case if the gas outlets were exposed to the environment. Instead, venting is towards the supply of liquid to be treated. The closed loops can be relatively small, in particular have a small diameter.

In an embodiment, the housing comprises a laterally protruding rim, e.g. a laterally protruding rim, located at the one axial end of the housing.

The rim facilitates sealing in a cartridge seat comprised in a co-operating part of the liquid treatment system of which the liquid treatment cartridge is configured to form a replaceable component. The sealing prevents a bypass of liquid past the housing of the liquid treatment cartridge. Even where the rim is not a sealing rim, the rim can still ensure that the housing of the liquid treatment cartridge is supported relatively uniformly in the cartridge seat.

In an example of this embodiment, a peripheral section of the axial end wall is comprised in the rim.

Thus, when the housing is supported by the rim, a relatively uniform axial force acts on the axial end wall.

In an embodiment, the housing comprises a vessel-shaped part and a capping part, wherein the capping part comprises the axial end wall, and wherein the vessel-shaped part is joined to the capping part to enclose the chamber.

This embodiment is relatively easy to assemble. The capping part may be an assembly of components. However, a main part of the capping part defining a shape of the capping part will generally be self-supporting and non-deformable.

In an example of any embodiment in which the housing comprises a laterally protruding rim at the one axial end of the housing, a peripheral section of the axial end wall is comprised in the rim and the housing comprises a vessel-shaped part and a capping part, the capping part comprises the axial end wall, and the vessel-shaped part is joined to the vessel-shaped part to enclose the chamber, the vessel-shaped part comprises a flange, and the flange is comprised in the rim.

Thus, the vessel-shaped part can be easily joined to the capping part comprising the axial end wall, e.g. by means of an adhesive bond or a joint obtainable by welding, for example ultrasonic welding. The rim allows the parts to be joined to be clamped to each other when the joint is formed.

In an embodiment, at least a section of at least one wall of the housing is porous.

This allows the liquid treatment cartridge to have a liquid outlet or outlets with a relatively large cross-sectional area without substantial weakening of the housing. A relatively large area, in combination with the protruding hollow structure, allows for liquid to flow through the chamber from the hollow protruding part or parts in multiple directions. This helps achieve a relatively high volumetric flow rate through the liquid treatment cartridge. Furthermore, where the chamber contains a bed of liquid treatment medium, relatively uniform treatment of the liquid and relatively uniform exhaustion of the treatment capacity of the liquid treatment medium are achievable.

In an embodiment, the housing comprises at least one sheet comprising at least one membrane, and the sheet forms at least a section of a wall of the housing.

This results in a relatively lightweight housing with a small environmental footprint. The at least one membrane may be a single membrane or a laminate of membranes forming the sheet. Where the sheet forms a wall section, only the sheet separates an interior of the housing, e.g. the chamber, from an environment of the housing. The sheet will generally be flexible, at least prior to being incorporated in the housing. The sheet may be liquid-pervious, e.g. because the at least one membranes forming the sheet are porous membranes. This need not be the case, however. The term membrane is used here generally to denote a thin pliable sheet-like structure.

In an example of this embodiment, at least one of the sheets is liquid-pervious.

This allows to achieve a relatively high throughput due to liquid outlets with a relatively large surface area. The at least one liquid-pervious sheets can also act as filters, allowing the chamber to be filled with a relatively fine granular liquid treatment medium. Compared with a filter block, which usually comprise a substantial amount of binder, the liquid-pervious sheet uses less (non-functional) material.

In an example of any embodiment in which the housing comprises at least one sheet comprising at least one membrane and the sheet forms at least a section of a wall of the housing, the at least one sheet comprise at least one sheet closed on itself around the chamber to form a lateral circumferential wall of the housing.

Combined with the protruding hollow structure, a relatively uniform flow of liquid from the hollow structure outwards in all directions is attainable. The lateral circumferential wall is obtainable by rolling a sheet in a cylinder and joining the edges to form a seam or by deforming a sheet in a direction transverse to a major surface of the sheet, e.g. by deep-drawing.

In an embodiment, at least one of the at least one hollow structures comprises a section proximal to the axial end wall that is impermeable.

This is a further feature that can help ensure that liquid flows uniformly through the chamber.

In an embodiment, at least one of the at least one hollow structures is provided with at least one liquid outlet allowing liquid to pass from an interior of the hollow structure into the chamber through a circumferential side wall of the hollow structure, e.g. a porous section of the circumferential side wall of the hollow structure.

This is also a feature that can help ensure that liquid flows uniformly through the chamber.

In an embodiment, at least one of the at least one hollow structures has a free end distal to the axial end wall that is located in the chamber.

The free end is located in the chamber. Being a free end, this end is disconnected from any of the walls bounding the chamber. This simplifies assembly.

In an example of this embodiment, at least one of the at least one hollow structures having a free end located in the chamber is provided with a bevel at the free end.

This simplifies manufacturing where the chamber is filled with liquid treatment medium. The bevelled free end is more easily inserted into the bed.

In an example of any embodiment in which at least one of the at least one hollow structures has a free end distal to the axial end wall that is located in the chamber, at least one of the at least one liquid outlets of at least one of the at least one hollow structures having a free end located in the chamber is provided in the free end.

A liquid outlet may be provided only in the free end and nowhere else in the hollow structure. The free end is located centrally in the chamber, so that all the liquid emerging from the outlet provided there will flow over approximately the same distance through the chamber.

In an embodiment of the liquid treatment cartridge, at least one of the at least one hollow structures is formed in one piece with the axial end wall.

This embodiment is relatively easy to assemble. Furthermore, there is no risk of leaks between the axial end wall and the hollow structure.

As already mentioned, the chamber of an embodiment of the liquid treatment cartridge may be at least partially filled with a liquid treatment medium, e.g. a granular liquid treatment medium.

The hollow structure and separate venting provide for relatively high throughput and relatively uniform flow through the liquid treatment medium or media.

An embodiment of the liquid treatment cartridge further comprises at least one mesh separating the gas inlet of at least one of the at least one venting passages from at least a section of the chamber.

This allows the chamber to contain relatively small fibres or grains of liquid treatment medium without the need to provide a screen in the venting passage or venting passages.

According to another aspect, the liquid treatment system according to the invention comprises a plurality of components, connectable to form an assembly and comprising:
a liquid treatment cartridge according to the first aspect of the invention; and
a reservoir part comprising a reservoir for receiving liquid to be treated,
wherein the reservoir part comprises at least one reservoir part outlet allowing liquid to flow out of the reservoir, and
wherein, in the assembled state, each of the at least one reservoir part outlets is in sealed fluid communication with at least one of:
   (i) at least one of the at least one liquid inlets of the liquid treatment cartridge; and
   (ii) the gas outlet of at least one of the at least one venting passages.

In an embodiment of the liquid treatment system, the reservoir part comprises at least one locking feature, wherein the plurality of components include a locking part comprising at least one locking feature for co-operating with the at least one locking features of the reservoir part to lock the locking part releasably to the reservoir part in the assembled state, and wherein the locking part is configured to engage the housing of the liquid treatment cartridge such as to clamp at least part of the housing of the liquid treatment cartridge between the locking part and the reservoir part.

Thus, the housing of the liquid treatment cartridge can be kept relatively simple. Furthermore, manufacturing tolerances are relatively uncritical as far as the housing of the liquid treatment cartridge is concerned. A relatively large part of the housing need also not be particularly stiff.

In an example of this embodiment, the clamping force is oriented mainly in the axial direction, with respect to the cartridge axis.

Thus, the liquid treatment cartridge is urged towards the reservoir part when locked to the reservoir part. This embodiment is relatively easy to implement using a locking part that is locked to the reservoir part by a twisting movement, e.g. where the co-operating parts of the locking part and reservoir part comprise screw threads or components forming a bayonet lock.

In an example of any embodiment in which the reservoir part comprises at least one locking feature, the plurality of components include a locking part comprising at least one locking feature for co-operating with the at least one locking features of the reservoir part to lock the locking part releasably to the reservoir part in the assembled state and the locking part is configured to engage the housing of the liquid treatment cartridge such as to clamp at least part of the housing of the liquid treatment cartridge between the locking part and the reservoir part, the housing of the liquid treatment cartridge comprises a laterally protruding rim at the one axial end of the housing, and the locking part is configured to engage the rim such as to exert an axial clamping force urging the housing towards the reservoir part.

This embodiment ensures that a relatively uniform clamping force is exerted on the housing of the liquid treatment cartridge.

In an embodiment of the liquid treatment system, the reservoir part comprises at least one locking feature, the plurality of components include a beaker-shaped part comprising at least one locking feature for co-operating with the at least one locking features of the reservoir part to lock the beaker-shaped part releasably to the reservoir part in the assembled state, and a cartridge-receiving chamber accommodating the liquid treatment cartridge is defined by the reservoir part and the beaker-shaped part in the assembled state.

The beaker-shaped part and the reservoir part together effectively form a funnel with a cartridge-receiving chamber in which the liquid treatment cartridge does not have to be placed by moving the liquid treatment cartridge through the reservoir in the reservoir part. The liquid treatment cartridge can still be shielded, at least from view, but also from environmental influences, e.g. in a kettle accommodating the funnel.

In an example of this embodiment, in which the reservoir part also comprises at least one locking feature, the plurality of components include a locking part comprising at least one locking feature for co-operating with the at least one locking features of the reservoir part to lock the locking part releasably to the reservoir part in the assembled state and the locking part is configured to engage the housing of the liquid treatment cartridge such as to clamp at least part of the housing of the liquid treatment cartridge between the locking part and the reservoir part, the beaker-shaped part corresponds to the locking part.

In an example of any embodiment in which the reservoir part comprises at least one locking feature, the plurality of components include a beaker-shaped part comprising at least one locking feature for co-operating with the at least one locking features of the reservoir part to lock the beaker-shaped part releasably to the reservoir part in the assembled state, and a cartridge-receiving chamber accommodating the liquid treatment cartridge is defined by the reservoir part and the beaker-shaped part in the assembled state, the liquid treatment cartridge is accommodated in the cartridge-receiving chamber with space between the liquid treatment cartridge and the beaker-shaped part in the assembled state and the beaker-shaped part is provided with at least one liquid outlet allowing liquid to flow out of the cartridge-receiving chamber.

This embodiment is well-suited to implementation as a gravity-driven liquid treatment system, in particular where the liquid treatment cartridge has more than one liquid outlet or a liquid outlet in the form of a porous wall covering a relatively large area. The liquid emerging from the liquid treatment cartridge is first collected in the cartridge-receiving chamber. From there, a single or limited number of outlets provide a well-defined stream of treated liquid that can be collected in a dispensing vessel, e.g. a jug or a tank provided with a tap. The rate of flow can be set by appropriate dimensioning of the outlets of the cartridge-receiving chamber.

An embodiment of the liquid treatment system further comprises at least one sealing element, e.g. a resilient sealing element, each forming a seal extending in a closed loop around at least one of the at least one liquid inlets of the liquid treatment cartridge in the assembled state.

The sealing element can be made of more resilient material than a remainder of the part (liquid treatment cartridge housing or reservoir part) bearing the sealing element. The sealing element need not, however, be separable from the part supporting the sealing element.

In an example of this embodiment, at least one, e.g. each, of the at least one sealing elements is supported by the reservoir part and arranged to engage the exterior surface of the housing of the liquid treatment cartridge in the assembled state.

The housing of the liquid treatment cartridge, the replaceable component of the liquid treatment system with the shortest useful lifespan, is thus kept relatively simple.

In an example of any embodiment of the liquid treatment system that further comprises at least one sealing element, e.g. a resilient sealing element, each forming a seal extending in a closed loop around at least one of the at least one liquid inlets of the liquid treatment cartridge in the assembled state, the seal is an axial seal.

The sealing element is thus compressed in axial direction. This can be accomplished by pressing the liquid treatment cartridge against the reservoir part. Shearing forces on the sealing element are minimised. Wear of the sealing element is thus also minimised.

The invention will be explained in further detail with reference to the accompanying drawings, in which:

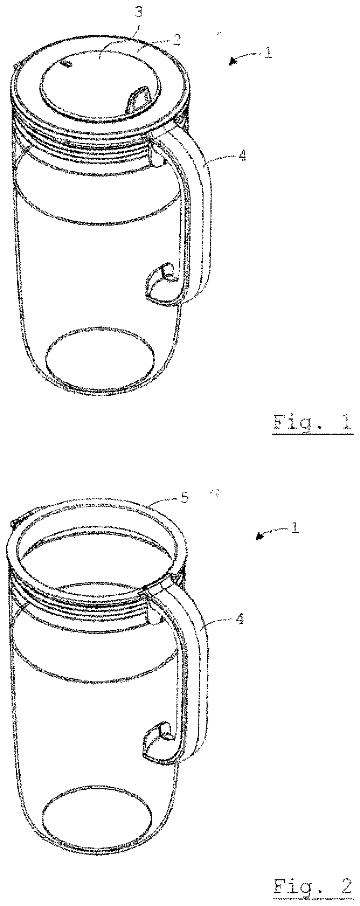

- Fig. 1: is a perspective view of a jug comprised in a liquid treatment system;
- Fig. 2: is a perspective view of the jug with a lid of the jug removed;
- Fig. 3: is an exploded view of an assembly of a funnel and liquid treatment cartridge for use with the jug to form the liquid treatment system;
- Fig. 4: is a cross-sectional view of the assembly of Fig. 3 in assembled state; and
- Fig. 5: is a cross-sectional view of the liquid treatment cartridge.

A liquid treatment system comprises a jug 1 or similar pouring vessel (e.g. a carafe) or dispensing vessel (e.g. a vessel provided with a tap) as an example of a vessel for collecting treated liquid. The liquid treatment system is an example of a system for treating an aqueous liquid, e.g. mains drinking water.

The jug 1 is provided with a lid 2 in which a fill opening (not shown) is provided, which closed by a closure element 3. In this example, the closure element 3 is a hinged closure element 3, arranged to pivot upwards and towards a handle 4 of the jug 1.

A support part 5 is arranged at a mouth of the jug 1. In the illustrated example, the support part 5 is generally ring-shaped.

The jug 1 is mainly made of transparent material, e.g. glass or polymer material. The lid 2 and handle 4 may be made of polymer material. The same is the case for the support part 5.

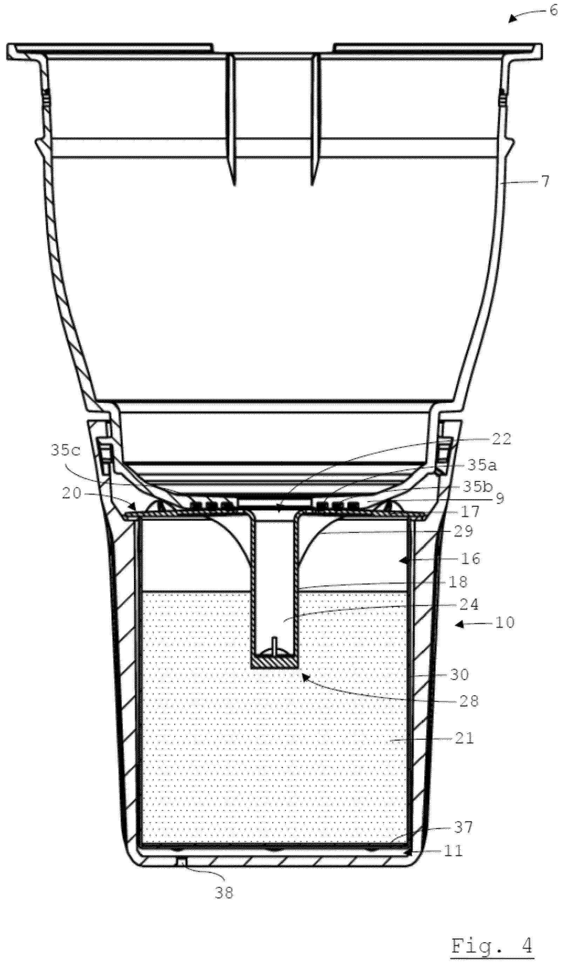

The liquid treatment system also comprises a funnel 6 (Fig. 4) comprising a reservoir part 7 comprising a reservoir for liquid to be treated. The reservoir part 7 comprises a single reservoir part outlet 8 through a reservoir part bottom wall 9.

The liquid treatment system, specifically the funnel 6, also comprises a beaker-shaped part 10. The beaker-shaped part 10 is made of material that is impermeable to liquid and defines a cartridge-receiving chamber 11.

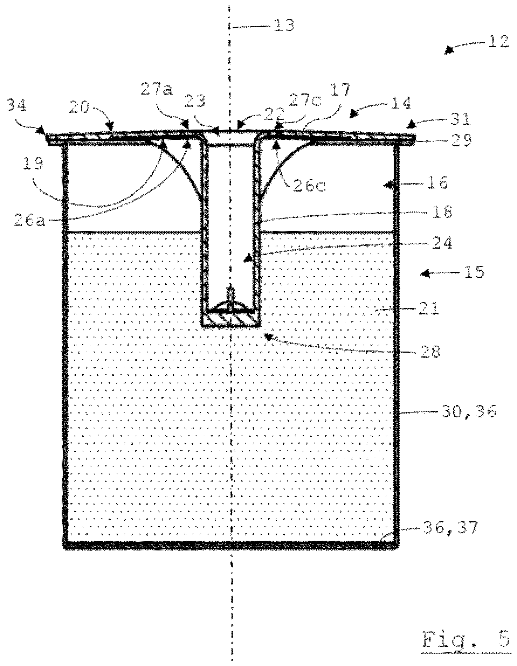

The liquid treatment system comprises a replaceable liquid treatment cartridge 12. It is convenient to define a cartridge axis 13 (Fig. 5) to describe the configuration of the liquid treatment cartridge 12 and the placement thereof in the liquid treatment system.

A housing of the liquid treatment cartridge 12 comprises a capping part 14 and a vessel-shaped part 15. The capping part 14 and the vessel-shaped part 15 are joined together at one axial end of the housing to enclose a chamber 16.

The capping part 14 comprises a section forming an axial end wall 17 and a section in the shape of a hollow structure 18 protruding into the chamber 16 from the axial end wall 17. In the illustrated embodiment, the axial end wall 17 and the hollow structure 18 are integral parts of a capping part 14 made in one piece. The capping part 14 may be obtainable by injection-moulding or additive manufacturing, for example. At least the axial end wall 17 is impermeable to at least liquid, more generally to fluid. The axial end wall 17 and the hollow structure 18 are self-supporting. They have a fixed shape to which they return when elastically deformed. That is to say that they are non-deformable.

The chamber 16 is bounded at an axial end proximal to the axial end of the housing at which the axial end wall 17 is provided by an interior surface 19 of the axial end wall 17. An exterior surface 20 of the axial end wall 17 forms an exterior surface of the housing of the liquid treatment cartridge 12.

In the illustrated embodiment, a bed 21 of liquid treatment medium is arranged in the chamber 16. The liquid treatment medium may be particulate or fibrous in nature, or the liquid treatment medium may be a reticulated medium. The bed 21 may comprise more than one liquid treatment medium. In the illustrated embodiment, at least one liquid treatment medium is a medium for treatment of liquid by means of a diffusive process. For present purposes this includes sorption, ion exchange and the entry into solution of minerals. The liquid treatment medium may, for example, comprise ion exchange resin, e.g. weakly acidic cation exchange resin. The weakly acidic cation exchange resin may be mainly in the hydrogen form. A fraction may, at least initially, be in the potassium or sodium form for buffering purposes. The liquid treatment medium may further comprise activated carbon. Other suitable liquid treatment media include compounds for adsorbing heavy metals.

A liquid inlet 22 is formed in the exterior surface 20. In this example, there is only a single liquid inlet 22, but there may be more than one in variants of the liquid treatment cartridge 12. The liquid inlet 22 is centred with respect to the cartridge axis 13 in the illustrated embodiment.

A passage 23 through the axial end wall 17 terminates at the liquid inlet 22 and is a continuation of an interior 24 of the hollow structure 18. It is noted that the passage 23 is only as long as the thickness of the axial end wall 17.

The same is the case for each of multiple venting passages 25a-d, each extending from a respective gas inlet 26a-d to a respective gas outlet 27a-d. The gas outlets 27a-d are formed separately from the liquid inlet 22 in the exterior surface 20. The gas inlets 26a-d are separate from the hollow structure 18. In the illustrated embodiment, there are four venting passages 25a-d. In variants there may be more or fewer, e.g. one. The multiple venting passages 25a-d are distributed uniformly along a circle surrounding the liquid inlet 22 in the illustrated embodiment. Thus, the gas inlets 26a-d are distributed uniformly along a circle surrounding a base of the hollow structure 18, the base being where the hollow structure 18 attaches to the axial end wall 17. In the illustrated embodiment, at least the respective gas outlets 27a-d of the multiple venting passages 25a-d adjoin the base of the hollow structure 18.

The part of the hollow structure 18 protruding into the chamber 16 provides at least one liquid outlet allowing liquid to pass from the hollow structure interior 24 into the chamber 16. The hollow structure 18 has a free end 28 at an axial end distal to the axial end wall 17. The free end 28 is located in the bed 21 of liquid treatment medium.

In one embodiment, the liquid outlet (not shown in detail) is provided only in the free end 28 and the hollow structure 18 is otherwise impervious to liquid. In another embodiment, a section of a circumferential side wall of the hollow structure 18 is porous or provided with one or more apertures. The liquid outlet(s) is or are in any case at some distance in axial direction to the axial end wall 17. Thus, liquid enters a relatively centrally located section of the bed 21 and flows outwards in all directions. Any gas trapped in the bed 21 is forced out, generally upwards into a head space between the bed 21 and the axial end wall 17, in use.

In the illustrated embodiment, the hollow structure 18 has a generally cylindrical circumferential side wall with a circular cross-section and an orthogonal end face at the free end 28. In variants, the cross-sectional shape may be different, e.g. polygonal or elliptical. Furthermore, the cross-section may vary in longitudinal direction, e.g. tapering, widening or having a waist. Also, the hollow structure 18 may be provided with a bevel at the free end 28, similar to a hypodermic needle, which facilitates insertion into the bed 21 of liquid treatment medium. Variants of the hollow structure 18 may also be curved or angled. In a further variant, the hollows structure 18 may branch out. Notwithstanding this, the illustrated shape is relatively easy to manufacture and provides little flow resistance.

In the illustrated embodiment, the vessel-shaped part 15 of the housing of the liquid treatment cartridge 12 comprises a flange 29. The flange 29 is joined to a peripheral section of the axial end wall 17, optionally with a mesh (not shown) interposed. Thus, the flange 29 is comprised in a rim 31, which protrudes laterally with respect to a circumferential lateral wall 30 of the housing, in this case of the vessel-shaped part 15. The joint may be an adhesive joint or a joint obtainable by welding, e.g. ultrasonic welding.

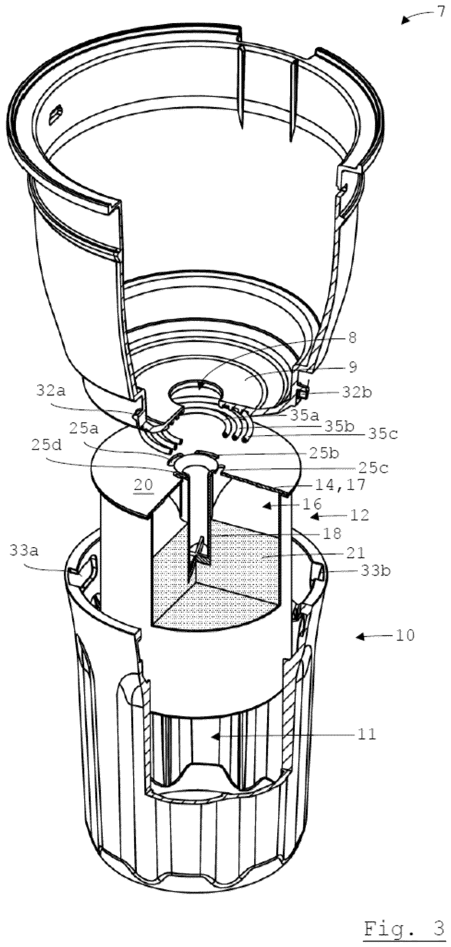

The reservoir part 7 is provided with bayonet lock protrusions 32a,b (Fig. 3) for engaging bayonet lock slots 33a,b formed on an interior of the beaker-shaped part 10. The bayonet lock protrusions 32a,b and bayonet lock slots 33a,b co-operate to lock the beaker-shaped part 10 to the reservoir part 7. These co-operating locking features interact to convert a locking force effecting a twisting movement of the beaker-shaped part 10 into an axially directed force tending to draw the beaker-shaped part 10 towards the reservoir part 7. The rim 31 of the housing of the liquid treatment cartridge 12 is supported in axial direction by one or more ledges formed on the beaker-shaped part 10. Thus, the locking force effecting a twisting movement of the beaker-shaped part 10 is also converted into a force urging the liquid treatment cartridge 12 towards the reservoir part 7.

Seen looking onto the axial end wall 17, the housing of the liquid treatment cartridge 12 has an outer perimeter 34 (Fig. 5), corresponding in this case to an outer perimeter of the axial end wall 17 and of the rim 31. A section of the exterior surface 20 within which the liquid inlet 22 and the gas outlets 27a-d are located forms a sealing surface for engaging each of multiple sealing elements 35a-c (Figs. 3, 4) supported by the reservoir part 7 so as to form, in each case, a seal extending in a closed loop around at least the liquid inlet 22. In the illustrated embodiment, the closed loops also extending around the gas outlets 27a-d. The sealing elements 35a-c are resilient sealing elements 35a-c made of a more elastic material than the material of the axial end wall 17 and the material of the reservoir part 7. Because the sealing elements 35a-c are compressed in axial direction, axial seals are formed.

It is noted that the seals extend in closed loops located radially inwards of the outer perimeter 34. Each loop encloses an area much smaller than the area enclosed by the outer perimeter 34 and at least the liquid inlet 22, in the example also the gas outlets 27a-d lie within the enclosed area. Thus, the reservoir part outlet 8 can be quite small relative to the lateral dimensions of the housing of the liquid treatment cartridge 12. This makes it easier to manufacture the reservoir part 7, e.g. by means of injection moulding. In particular, the dimensions of the section engaging the liquid treatment cartridge 12 in the assembled state of the funnel 6 can be made relatively stiff and be maintained within relatively tight tolerance ranges without using a lot of material.

The vessel-shaped part 15 comprises at least one sheet 36 comprising at least one membrane.

The sheet 36 is liquid-pervious. The sheet 36 consists of one or more porous membranes. These membranes may be made of nylon, for example. In an embodiment, the membranes are microfiltration membranes. As an example, the sheet 36 may have a micron rating in the range of 0.1 - 5, implying that 99.9% of particles at or bigger than the micron rating will be stopped by the sheet 36. In an embodiment, the sheet 36 has a thickness in the range of 0.1 -0.5 mm, e.g. in the range of 0.1 - 0.3 mm. Mean flow pore (ASTM F316) can be in the range of 0.2 - 0.7, for example.

In the illustrated example, the sheet 36 is formed in the shape of a beaker, e.g. by deep drawing. The formed sheet 36 thus forms the circumferential lateral housing wall 30 over a majority of the surface area of the lateral housing wall 30. Where this is the case, the chamber 16 is only separated from an environment of the liquid treatment cartridge 12 by the sheet 36. As illustrated, the sheet 36 also forms a majority of a bottom wall 37 of the housing.

In a variant, the housing comprises at least two sheets, one forming the lateral housing wall 30 and the other forming the housing bottom wall 37, specifically a bottom wall of the vessel-shaped part 15. Each may be constituted as the sheet 36 described above, and they may be joined together by adhesive or a welded joint, e.g. obtainable by thermal or ultrasonic welding. Alternatively, one of the sheets, e.g. the one forming the housing bottom wall 37, i.e. the wall at the opposite axial end of the housing of the liquid treatment cartridge 12 to the axial end wall 17, may be liquid-impervious.

Because the sheet 36 is flexible, the vessel-shaped part 15 is deformable. However, the sheet 36 does not fold in on itself or against the beaker-shaped part 10, because the liquid treatment cartridge 12 is suspended by the rim 31 in the cartridge-receiving chamber 11. There is space between the housing of the liquid treatment cartridge 12 and an interior surface of the beaker-shaped part 10 to allow the liquid to flow out of the chamber 16. In a variant, one or more of the walls bounding the cartridge-receiving chamber 11 may be provided on an interior surface with one or more spacers (not shown), e.g. ribs, for contacting the housing of the liquid treatment cartridge 12, e.g. the sheet 36.

The sheet 36 is configured to retain particles comprise in the bed 21 of liquid treatment medium. Because the hollow structure 18 delivers the liquid to be treated to a central region of the bed 21, the flow of liquid through the bed is outwards in all directions. Thus, the treatment capacity of the liquid treatment medium is also consumed relatively uniformly.

The liquid flowing out of the liquid treatment cartridge 12 through the sheet 36 is collected in the cartridge-receiving chamber 11 and can leave through a funnel outlet 38 (Fig. 4) through a wall of the cartridge-receiving chamber 11. In a variant, there may be multiple such funnel outlets 38. In another variant, the or each funnel outlet 38 may extend through a side wall of the cartridge-receiving chamber 11.

The invention is not limited to the embodiment described above, which may be varied within the scope of the accompanying claims. For example, it is possible to provide the housing of the liquid treatment cartridge with locking features directly co-operating with locking features of the reservoir part, so that a part like the beaker-shaped part is not strictly necessary. An example of a suitable locking mechanism is disclosed in WO 2012/041880 A1. Instead of or in addition to the sealing elements 35a-c, the reservoir part 7 may be provided with a hollow protruding part in which the reservoir part outlet 8 is formed and which is insertable into the liquid inlet 22 in the assembled state of the funnel 6.

### List of reference numerals

- 1 -: Jug
- 2 -: Lid
- 3 -: Closure element
- 4 -: Handle
- 5 -: Support part
- 6 -: Funnel
- 7 -: Reservoir part
- 8 -: Reservoir part outlet
- 9 -: Reservoir part bottom wall
- 10 -: Beaker-shaped part
- 11 -: Cartridge-receiving chamber
- 12 -: Liquid treatment cartridge
- 13 -: Cartridge axis
- 14 -: Capping part
- 15 -: Vessel-shaped part
- 16 -: Chamber
- 17 -: Axial end wall
- 18 -: Hollow structure
- 19 -: Interior surface of axial end wall
- 20 -: Exterior surface of axial end wall
- 21 -: Bed of liquid treatment medium
- 22 -: Liquid inlet
- 23 -: Passage
- 24 -: Hollow structure interior
- 25a-d -: Venting passages
- 26a-d -: Gas inlet
- 27a-d -: Gas outlet
- 28 -: Free end of hollow structure
- 29 -: Flange of vessel-shaped part
- 30 -: Lateral housing wall
- 31: Rim
- 32a,b -: Bayonet lock protrusions
- 33a,b -: Bayonet lock slots
- 34 -: Outer perimeter
- 35a-c -: Sealing elements
- 36 -: Sheet
- 37 -: Housing bottom wall
- 38 -: Funnel outlet

## Claims

1. Liquid treatment cartridge, comprising a housing,
wherein the housing comprises an axial end wall (17) at one axial end, with respect to a cartridge axis (13),
wherein the housing comprises at least one liquid inlet (22) in an exterior surface (20) of the housing at the one axial end,
wherein the housing encloses a chamber (16),
wherein the housing comprises at least one axial section pervious to liquid flowing out of the chamber (16) at a position axially removed from the one axial end of the housing,
wherein the housing comprises at least one hollow structure (18) of which at least a part protrudes into the chamber (16) with respect to the axial end wall (17),
wherein the protruding part of the hollow structure (18) provides at least one liquid outlet allowing liquid to pass from an interior (24) of the hollow structure (18) into the chamber (16),
wherein the interior (24) of the hollow structure (18) is continued by a passage (23) through the axial end wall (17), which passage (23) terminates at at least one of the at least one liquid inlets (22), and
wherein the housing comprises at least one venting passage (25a-d) extending from a gas inlet (26a-d) to a gas outlet (27a-d) and through the axial end wall (17) for venting gas from the chamber (16), **characterised in that**
the gas outlet (27a-d) is a gas outlet (27a-d) formed in the exterior surface (20), and **in that**
the gas inlet (26a-d) is a gas inlet (26a-d) separate from the protruding part of the hollow structure (18).

2. Liquid treatment cartridge according to claim 1,
wherein the gas outlet (27a-d) is a gas outlet (27a-d) formed separately from the liquid inlets (22).

3. Liquid treatment cartridge according to claim 1 or 2,
wherein the housing has an outer perimeter (34), e.g. corresponding to an outer perimeter (34) of the axial end wall (17), seen looking onto the axial end wall (17) in axial direction,
wherein the housing comprises a part for sealingly engaging a co-operating part (35a-c) of a liquid treatment system to form at least one seal extending in a closed loop around at least one of the at least one liquid inlets (22), and
wherein the closed loop is located radially inwards of the outer perimeter (34).

4. Liquid treatment cartridge according to claim 3,
wherein the seal is an axial seal.

5. Liquid treatment cartridge according to claim 3 or 4,
wherein the part for sealingly engaging a co-operating part of a liquid treatment system comprises at least one of
(i) a section of the axial end wall (17) comprising a section of the exterior surface (20) in which at least one of the at least one liquid inlets (22) is formed and
(ii) a sealing element seated on the axial end wall (17) and extending in a closed loop around at least one of the at least one liquid inlets (22).

6. Liquid treatment cartridge according to any one of claims 3-5,
wherein the closed loop further extends around the gas outlet (27a-d) of at least one of the at least one venting passages (25a-d), e.g. around the respective gas outlet (27a-d) of all of the venting passages (25a-d).

7. Liquid treatment cartridge according to any one of the preceding claims,
wherein at least one of the at least one hollow structures (18) is provided with at least one liquid outlet allowing liquid to pass from an interior (24) of the hollow structure (18) into the chamber (16) through a circumferential side wall of the hollow structure (18), e.g. a porous section of the circumferential side wall of the hollow structure (18).

8. Liquid treatment system, comprising a plurality of components, connectable to form an assembly and comprising:
a liquid treatment cartridge (12) according to any one of the preceding claims; and
a reservoir part (7) comprising a reservoir for receiving liquid to be treated,
wherein the reservoir part (7) comprises at least one reservoir part outlet (8) allowing liquid to flow out of the reservoir, and
wherein, in the assembled state, each of the at least one reservoir part outlets (8) is in sealed fluid communication with at least one of:
(i) at least one of the at least one liquid inlets (22) of the liquid treatment cartridge (12); and
(ii) the gas outlet (27a-d) of at least one of the at least one venting passages (25a-d).

9. Liquid treatment system according to claim 8,
wherein the reservoir part (7) comprises at least one locking feature (32a,b),
wherein the plurality of components include a locking part (10) comprising at least one locking feature (33a,b) for co-operating with the at least one locking features (32a,b) of the reservoir part (7) to lock the locking part (10) releasably to the reservoir part (7) in the assembled state, and
wherein the locking part (10) is configured to engage the housing of the liquid treatment cartridge (12) such as to clamp at least part of the housing of the liquid treatment cartridge (12) between the locking part (10) and the reservoir part (7).

10. Liquid treatment system according to claim 9,
wherein the clamping force is oriented mainly in the axial direction, with respect to the cartridge axis (13).
